# EUROPEAN PATENT APPLICATION

(11) **EP 2 481 920 A1**
(43) Date of publication of application: **01.08.2012**
(21) Application number: 12000286.0
(22) Date of filing: 18.01.2012
(51) Int. Cl.: F03D 7/02, F03D 11/00

(54) **Wind turbine generator as well as parameter acquisition system and method thereof**

(30) Priority: 31.01.2011 CN 201110034132
(71) Applicant: Sinovel Wind Group Co., Ltd, Haidian District, Beijing 100872 (CN)
(72) Inventor: Li, Lei, Haidan District Beijing 100872 (CN); Wei, Hao, Haidan District Beijing 100872 (CN); Wang, Zhaokui, Haidan District Beijing 100872 (CN); Li, Wenjian, Haidan District Beijing 100872 (CN)
(74) Representative: Pfenning, Meinig & Partner GbR

(57) **Abstract**

The present invention discloses a wind turbine generator as well as a parameter acquisition system and a method thereof The acquiring system comprises: at least one sensor, arranged in the hub of the wind turbine generator and configured to acquire environment operation parameters of the hub, and a data processing module, comprising a parameter acquisition unit, a parameter reading unit and a storage unit, wherein the parameter acquisition unit is connected with each sensor and configured to obtain environment operation parameters acquired by the each sensor; the parameter reading unit is connected with pitch drivers in the wind turbine generator and configured to read load characteristic parameters of the pitch drivers; the storage unit is connected with the parameter acquisition unit and the parameter reading unit and configured to store the environment operation parameters and load characteristic parameters. With the acquiring system arranged in the wind turbine generator of the present invention, relevant data of wheel-hub environment and the pitch load characteristics can be acquired in real time, and hence simulation test environment of the pitch system in a workshop can be improved.

## Description

### FIELD OF THE TECHNOLOGY

The present invention relates to wind turbine generator testing technology, in particular to a wind turbine generator as well as a parameter acquisition system and method thereof.

### BACKGROUND

The power generation principle of a wind turbine generator is to drive blades to be rotated by wind power, drive the hub to be rotated by the blades, and further transfer the rotation of the hub to the generator to generate electricity. A pitch system is generally arranged in a large-sized wind turbine generator set and a pitch angle of the blades on the hub is adjusted through a pitch system to change aerodynamic characteristics of the blades. The pitch angle can be adjusted by the pitch system at any time according to the change of wind speed, so as to control the wind power absorbed by the wind turbine generator. Therefore, on one hand, output power and rotating speed of the wind turbine generator are guaranteed to be stable, and on the other hand, impact load of the wind turbine generator applied by wind can be reduced.

In a wind turbine generator, a root of each of the blades is connected on the hub through a bearing having an internal gear. A pitch motor is connected to a gear box fixed on the hub through a flange. The pitch system engages with an inner gear ring of the blades in hub through a driving gear, and directly carries out pitch control for the blades.

Generally, the operation environment of a wind turbine generator is relatively poor; meanwhile, the wind turbine generator is influenced by various factors such as atmospheric pressure, temperature, humidity, vibration and so on. Therefore, an eligible pitch system is needed to be designed according to characteristics of each working condition. Hence, in order to guarantee the pitch system of a wind turbine generator to be operated reliably and stably under various working conditions, the system is needed to be carried out with tests under the various working conditions. However, when the pitch system is tested in a workshop, generally, all of actual working conditions of the pitch system can not be simulated due to the limitation of conditions. Therefore, the pitch system is needed to be tested on the operation site, so as to inspect actual operation conditions of the pitch system of the wind turbine generator. However, obviously, if the wind turbine generator is tested on the operation site, test cost will be increased remarkably; furthermore, it is also difficult to be popularized widely.

### SUMMARY

One aspect of the present invention provides a wind turbine generator as well as a parameter acquisition system and method thereof, so as to optimize test environment of a pitch system, improve test effect and reduce test cost.

An embodiment of the present invention provides a parameter acquisition system of a wind turbine generator, comprising:

at least one sensor, arranged in the hub of the wind turbine generator and configured to acquire environment operation parameters of the hub;

a data processing module, comprising a parameter acquisition unit, a parameter reading unit and a storage unit, wherein

the parameter acquisition unit is connected with each sensor and configured to obtain the environment operation parameters acquired by the each sensor;

the parameter reading unit is connected with pitch drivers in the wind turbine generator and configured to read load characteristic parameters of the pitch drivers; and

the storage unit is connected with the parameter acquisition unit and the parameter reading unit and configured to store the environment operation parameters and load characteristic parameters.

Another embodiment of the present invention provides a wind turbine generator, which comprises a generator, a hub, a plurality of blades and a pitch system, wherein the pitch system comprises a main controller arranged in the hub and pitch drivers connected with the blades. The main controller and each of the pitch drivers are connected with each other through a field bus, wherein the wind turbine generator further comprises the parameter acquisition system provided by the present invention.

A further embodiment of the present invention provides a parameter acquisition method of a wind turbine generator, comprising:

obtaining, by at least one sensor arranged in the hub in the wind turbine generator, environment operation parameters acquired by the at least one sensor;

reading load characteristic parameters of a pitch driver from the pitch driver in the wind turbine generator; and

storing the environment operation parameters and the load characteristic parameters.

The wind turbine generator as well as the parameter acquisition system and method provided by the present invention, with the acquiring system being arranged in the wind turbine generator, can acquire relevant data of hub environment and the pitch systemload characteristics in real time, and hence simulation test environment of the pitch system in a workshop and test effects can be improved. Furthermore, the abovementioned system can obtain data of actual operation working conditions with relatively low cost. Compared with testing each pitch system in an actual wind turbine generator, the abovementioned system of the present invention can remarkably reduce the cost and be easily popularized and implemented.

### BRIEF DESCRIPTION OF THE DRAWINGS

FIG.1 is a structural schematic diagram of a parameter acquisition system of a wind turbine generator provided by Embodiment 1 of the present invention.

FIG.2 is a structural schematic diagram of a parameter acquisition system of a wind turbine generator provided by Embodiment 2 of the present invention.

FIG.3 is a structural schematic diagram of a parameter acquisition system of a wind turbine generator provided by Embodiment 3 of the present invention.

### DETAILED DESCRIPTION

In order to make the purposes, technical solutions and advantages of the embodiments of the present invention more apparent, the technical solutions of the embodiments of the present invention will be described more clearly and completely in combination with the drawings of the embodiments of the present invention. Obviously, the embodiments described here are a part of the embodiments of the present invention and not all of the embodiments. Based on the embodiments of the present invention, all of other embodiments obtained by those skilled in the art without creative work are within the protection scope of the present invention.

Embodiment 1

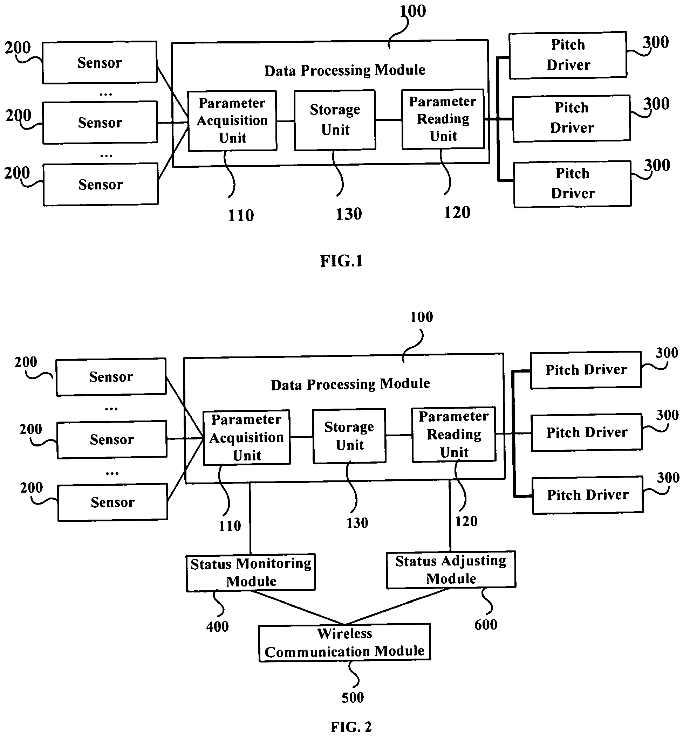

FIG.1 is a structural schematic diagram of a parameter acquisition system of a wind turbine generator provided by Embodiment 1 of the present invention. The parameter acquisition system comprises: a data processing module 100 and at least one sensor 200. Each sensor 200 is provided in the hub of the wind turbine generator and configured to acquire environment operation parameters of the hub. The data processing module 100 specifically comprises a parameter acquisition unit 110, a parameter reading unit 120 and a storage unit 130, wherein the parameter acquisition unit 110 is connected with each sensor 200 and configured to obtain environment operation parameters acquired by the sensor 200; the parameter reading unit 120 is connected with pitch drivers 300 in the wind turbine generator and configured to read load characteristic parameters of the pitch drivers 300; and the storage unit 130 is connected with the parameter acquisition unit 110 and the parameter reading unit 120 and configured to store the environment operation parameters and the load characteristic parameters.

In the technical solution of the present embodiment, with the parameter acquisition system being arranged in the wind turbine generator, relevant data of hub environment and load characteristics of pitch system can be acquired in real time. Furthermore, the parameter reading unit 120 specifically reads the load characteristic parameters which are correspondingly measured when the environment operation parameters are measured. The storage unit 130 is preferably configured to correspondingly store the environment operation parameters and the load characteristic parameters which are measured at the same time. The load characteristics under the environment represented by the particular environment operation parameters can be reflected more actually, thus improving simulation test environment of the pitch system in a workshop and test effects. In addition, the abovementioned real-time parameter acquisition system can obtain data of actual operation working conditions with relatively low cost, and can significantly lower the cost compared with testing each pitch system in the actual wind turbine generator.

A typical structure of the pitch system arranged in the wind turbine generator adopts a distribution-type control system, which comprises a main controller realized by a programmable logic controller (PLC) as a master station; and comprises the pitch drivers as slave stations. The number of the pitch drivers is equal to the number of blades and is three generally. The main controller and the pitch drivers are connected with each other through a field bus, for example, through a controller area network (CAN) bus, thus realizing communication. As a plurality of new technologies and distinct designs are adopted, the CAN bus has the advantages of reliability, instantaneity and flexibility. The operation of a pitch motor can be controlled by the pitch driver. Generally, the pitch drivers are also connected with a backup power to guarantee reliable operation of the pitch drivers.

In the technical solution of the present embodiment, the parameter reading unit 120 is preferably connected with the field bus of the pitch drivers 300, so as to read the rotating speed, torque and temperature of the motor, the voltage and current of the drivers, the temperature of a radiator, and any one or more items of the voltage and the temperature of the backup power through the bus. The parameter acquisition system and the pitch drivers 300 in the pitch system of the wind turbine generator are independent from each other. Only the parameter reading unit 120 reads the load characteristic parameters of the pitch system from the pitch drivers 300 through the field bus.

In the present embodiment, there are a plurality of sensors, which at least comprise a barometric sensor, a temperature sensor, a humidity sensor and a vibration sensor, and can regularly measure the environment operation parameters of the hub. The environment operation parameters at least comprise the factors such as barometric pressure, temperature, humidity, vibration and so on.

When the pitch system is tested, information such as barometric pressure, temperature, humidity, vibration and so on, as well as various load characteristic parameters during the pitch system is operated, such as the rotating speed, torque and temperature of the motor, the voltage and current of the drivers, the temperature of the radiator, the voltage and temperature of the backup power and so on, are needed. The parameter acquisition system of the present embodiment can facilitate to improve a testing system of the workshop by acquiring the abovementioned data.

Embodiment 2

FIG.2 is a structural schematic diagram of a parameter acquisition system of a wind turbine generator provided by Embodiment 2 of the present invention. Based on the technical solution of the Embodiment 1, the parameter acquisition system further comprises a status monitoring module 400, a wireless communication module 500 and a status adjusting module 600. The status monitoring module 400 is connected with the data processing module 100 and configured to monitor operation status of the data processing module 100; the wireless communication module 500 is connected with the status monitoring module 400 and configured to transmit the operation status to a control room in wireless communication manner and receiving control instructions transmitted by the control room; and the status adjusting module 600 is connected with the data processing module 100 and configured to adjust the operation status of the data processing module 100 according to the control instructions.

In the technical solution of the present embodiment, the status of the data processing module of the parameter acquisition system can be monitored and recovered in real time based on wireless communication technique. The wireless communication module can be realized through the adoption of a plurality of wireless communication means, for example, radio frequency, general communication network, or Global System for Mobile Communications (GSM), etc.

With the adoption of the technical solution of the present embodiment, working conditions of the data processing module 100 can be monitored wirelessly. When the data processing module 100 fails and can not be operated normally, for example, the parameters can not be acquired, read and stored normally, failure operation status can be immediately reported to the control room through the wireless communication module 500. The control instructions can be transmitted from the control room automatically or manually by an operator, so as to control the operations such as restart, recover and so on of the data processing module, for example.

Embodiment 3

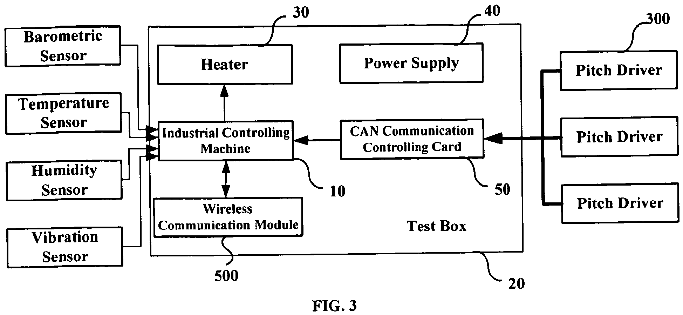

FIG.3 is a structural schematic diagram of a parameter acquisition system of a wind turbine generator provided by Embodiment 3 of the present invention. The present embodiment can be based on any one of the abovementioned technical solutions. Preferably, the parameter acquisition unit and the storage unit of the data processing module, the status monitoring module and the status adjusting module are integrated in an industrial controlling machine (industrial PC) 10. The parameter acquisition unit is an acquisition card in the industrial controlling machine 10; the storage unit is a hard disk in the industrial controlling machine 10; and the parameter reading unit is a CAN communication controlling card 50 connected with the industrial controlling machine 10. The industrial controlling machine 10, the CAN communication controlling card 50 and the wireless communication module 500 are arranged in a test box 20 which is arranged in the hub.

The sensors arranged in the inner part of the hub and configured to measure various environment parameters, are a barometric sensor, a temperature sensor, a humidity sensor and a vibration sensor specifically. Data is acquired through the industrial controlling machine 10 in the test box 20; meanwhile, various operation data of the pitch system are acquired through the CAN communication controlling card 50 in the test box 20; finally, these data are stored in the solid state hard disk in the industrial controlling machine 10 so as to be analyzed.

In the parameter acquisition system of the present embodiment, a heater 30 can be further arranged in the test box 20 for heating the test box 20 to maintain the temperature thereof. When the temperature of the wind turbine generator under poor environment is relatively low, the controlling devices in the test box 20 can be maintained by the heater 30 to be under a normal working temperature. The test box 20 can also separate the controlling devices therein from the hub and the sensor 200 outside, so that actual parameters can be inspected by the sensor 200. The heater 30 can be controlled by the industrial controlling machine 10, for example, the heater 30 is started to heat when the environment temperature is detected to be lower than a set temperature.

A power supply 40 arranged preferably in the parameter acquisition system comprises an Uninterruptible Power Supply (UPS), which is arranged in the test box 20 and configured to supply power to each sensor 200, the industrial controlling machine 10 and the wireless communication module 500, thus guaranteeing the parameter acquisition system to work continuously. Furthermore, the power supply 40 is independent from a power supply system of the wind turbine generator, thus it is not influenced by the working conditions of the wind turbine generator, and can acquire data of working conditions of actual operation in real time.

In the technical solution of the present embodiment, the test box 20 comprising the industrial controlling machine 10, the CAN communication controlling card 50, the power supply 40 with the UPS, the heater 30 and the wireless communication module 500 is arranged in the hub, wherein the industrial controlling machine 10 is responsible for acquiring and reading various data; the power supply 40 is responsible for supplying power to the system; the heater 30 is responsible for maintaining working temperature of the test box 20; the wireless communication module 500 is responsible for monitoring wirelessly the working status of the test box 20; and the CAN communication controlling card 50 is responsible for reading the various load characteristic data of pitch system.

The sensors, such as the barometric sensor, the temperature sensor, the humidity sensor, the vibration sensor, and so on, can be arranged in the hub and are connected with the acquisition card of the industrial controlling machine in the test box. The CAN communication controlling card in the test box is connected with a communication interface of each pitch driver and reads information through the CAN bus. The system is initialized after the wind turbine generator is powered up. The initialization of the CAN communication system mainly comprises settings of working mode, filtration reception mode, shielding reception register, code reception register, Baud-rate parameters, interrupt enable register and so on. Meanwhile, node addresses of three pitch drivers and the one CAN communication controlling card are respectively 1, 2, 3 and 4. After the industrial controlling machine is initialized, the data of various sensors are prepared to be acquired and recorded; meanwhile, the wireless communication device sends status parameters of the acquisition system at the beginning of operation to the operator. The test box automatically acquires and records the data at regular time, and all of the data can be stored in a solid state hard disk of the industrial controlling machine. At regular time, for example, per one month, all the data are manually read from the industrial controlling machine at once, including the information, such as the barometric pressure, temperature, humidity, vibration and so on, and various load characteristic parameters during operation of the pitch system, such as the rotating speed, torque and temperature of the motor, the voltage and current of the drivers, the temperature of the radiator, as well as the voltage and temperature of the backup power, etc. With the wireless communication device, the operator can remotely monitor whether the parameter acquisition system is operated normally or not. If the system is found to be operated abnormally, the operations, such as restart, recover and so on, can be carried out, so as to guarantee the acquisition system to be operated safely and stably. With the various recorded data, the performance of the pitch system of the wind turbine generator can be estimated to realize the improvement of a pitch test system of the workshop.

The embodiment of the present invention further provides a wind turbine generator, which comprises a generator, a hub, a plurality of blades and a pitch system. The pitch system comprises a main controller disposed in the hub and pitch drivers connected with the blades. The main controller is connected with each of the pitch drivers through a field bus. The wind turbine generator further comprises the parameter acquisition system of the wind turbine generator provided in any one of the embodiments of the present invention. With the setting of the parameter acquisition system, a comprehensive test system of the wind turbine generator is formed for hub environment and load characteristics of pitch system of the wind turbine generator. The hub environment and various load characteristic of pitch system parameters during the actual operation of the pitch system of the wind turbine generator can be recorded in real time, so as to carry out further analysis to deeply know operation characteristics of the pitch system of the wind turbine generator, and improve the pitch test system of the workshop according to actual operation data, thus the pitch system can be better designed.

The embodiment of the present invention further provides a parameter acquisition method of a wind turbine generator. Preferably, the method is carried out with the adoption of the parameter acquisition system of the wind turbine generator provided by any one of the embodiments of the present invention. The method comprises the following steps:

obtaining, by at least one sensor arranged in the hub in the wind turbine generator, environment operation parameters acquired by the sensor;

reading load characteristic parameters of a pitch driver from the pitch driver in the wind turbine generator; and

storing the environment operation parameters and the load characteristic parameters.

In the abovementioned technical solution, it is preferable to correspondingly store the environment operation parameters and the load characteristic parameters which are measured at the same time.

With the parameter acquisition method of the wind turbine generator, relevant data of the hub environment and the load characteristics of pitch system can be acquired in real time, and hence simulation test environment of the pitch system in the workshop can be improved.

Finally, it should be noted that the above examples are merely provided for describing the technical solutions of the present invention, but not intended to limit the present invention. It should be understood by the ordinary skill in the art that although the present invention is described in detail with reference to the foregoing embodiments, modifications can be made to the technical solutions described in the foregoing embodiments, or equivalent replacements can be made to some technical features in the technical solutions, without the essence of corresponding technical solutions departing from the spirit and scope of the embodiments of the present invention.

## Claims

1. A parameter acquisition system of a wind turbine generator, comprising:
at least one sensor, arranged in a hub of the wind turbine generator and configured to acquire environment operation parameters of the hub;
a data processing module, comprising a parameter acquisition unit, a parameter reading unit and a storage unit, wherein
the parameter acquisition unit is connected with the sensor and configured to obtain the environment operation parameters acquired by the sensor;
the parameter reading unit is connected with pitch drivers in the wind turbine generator and configured to read load characteristic parameters of the pitch drivers; and
the storage unit is connected with the parameter acquisition unit and the parameter reading unit and configured to store the environment operation parameters and load characteristic parameters.

2. The parameter acquisition system of claim 1, wherein the parameter reading unit is connected with a field bus of the pitch drivers, so as to read rotating speed, torque and temperature of a pitch motor, voltage and current of the drivers, temperature of a radiator, and any one or more of voltage and temperature of a backup power.

3. The parameter acquisition system of claim 1, wherein there are a plurality of the sensors, at least including a barometric sensor, a temperature sensor, a humidity sensor and a vibration sensor.

4. The parameter acquisition system of claim 1, 2 or 3, further comprising:
a status monitoring module, connected with the data processing module and configured to monitor operation status of the data processing module;
a wireless communication module, connected with the status monitoring module and configured to transmit the operation status to a control room in wireless communication manner and receiving control instructions transmitted by the control room; and
a status adjusting module, connected with the data processing module and configured to adjust the operation status of the data processing module according to the control instructions.

5. The parameter acquisition system of claim 4, wherein the parameter acquisition unit and the storage unit of the data processing module as well as the status monitoring module and the status adjusting module are integrated in an industrial controlling machine, the parameter acquisition unit is an acquisition card in the industrial controlling machine, the storage unit is a hard disk in the industrial controlling machine, the parameter reading unit is a controller area network (CAN) communication controlling card connected with the industrial controlling machine, and the industrial controlling machine, the CAN communication controlling card and the wireless communication module are arranged in a test box, which is arranged in the hub.

6. The parameter acquisition system of claim 5, further comprising a heater which is arranged in the test box and configured to heat the test box to maintain temperature thereof.

7. The parameter acquisition system of claim 5, further comprising an uninterruptible power supply, which is arranged in the test box and configured to supply power to the sensors, the industrial controlling machine and the wireless communication module.

8. The parameter acquisition system of claim 1, wherein the storage unit is further configured to correspondingly store the environment operation parameters and the load characteristic parameters which are measured at the same time.

9. A wind turbine generator, comprising a generator, a hub, a plurality of blades and a pitch system, wherein the pitch system comprises a main controller arranged in the hub and pitch drivers connected with the blades, and the main controller and each of the pitch drivers are connected with each other through a field bus, wherein the wind turbine generator further comprises the parameter acquisition system of any one of claims 1-8.

10. A parameter acquisition method of a wind turbine generator, comprising:
obtaining, by at least one sensor arranged in the hub in the wind turbine generator, environment operation parameters acquired by the sensor;
reading load characteristic parameters of a pitch driver from the pitch driver in the wind turbine generator; and
storing the environment operation parameters and load characteristic parameters.

11. The parameter acquisition method of claim 10, wherein storing the environment operation parameters and the characteristic parameters comprises:
storing the environment operation parameters and the load characteristic parameters which are measured at the same time.
